(19) Europäisches Patentamt / European Patent Office / Office européen des brevets

(11) **EP 1 889 106 B1**

(12) **FASCICULE DE BREVET EUROPEEN**

(45) Date de publication et mention
de la délivrance du brevet:
**01.09.2010 Bulletin 2010/35**

(21) Numéro de dépôt: **06794460.3**

(22) Date de dépôt: **24.05.2006**

(51) Int Cl.:
*G02B 6/125* *(2006.01)*

(86) Numéro de dépôt international:
**PCT/FR2006/050480**

(87) Numéro de publication internationale:
**WO 2006/129035 (07.12.2006 Gazette 2006/49)**

(54) **CIRCUIT OPTIQUE INTEGRE COMPORTANT UN GUIDE DE LUMIERE FORMANT AU MOINS UNE SEPARATION OPTIQUE**

OPTISCHE INTEGRIERTE SCHALTUNG MIT EINEM MINDESTENS EINE OPTISCHE TRENNUNG BILDENDEN LICHTLEITER

OPTICAL INTEGRATED CIRCUIT COMPRISING A LIGHT GUIDE FORMING AT LEAST ONE OPTICAL SEPARATION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **25.05.2005 FR 0551376**

(43) Date de publication de la demande:
**20.02.2008 Bulletin 2008/08**

(73) Titulaire: **Photline Technologies**
**25000 Besançon (FR)**

(72) Inventeurs:
• **GROSSARD, Nicolas**
**F-25000 Besançon (FR)**
• **HAUDEN, Jérôme**
**F-25000 Besançon (FR)**
• **PORTE, Henri**
**F-25770 Serre Les Sapins (FR)**

(74) Mandataire: **Michelet, Alain et al**
**Cabinet Harlé et Phélip**
**7, rue de Madrid**
**75008 Paris (FR)**

(56) Documents cités:
EP-A- 0 716 336          EP-A- 1 318 420
DE-A1- 4 225 085        US-A- 4 389 567
US-A1- 2002 038 900

• **VINCHANT J-F ET AL: "INP DIGITAL OPTICAL SWITCH GUIDED-WAVE PHOTONIC SWITCHING" IEE PROCEEDINGS J. OPTOELECTRONICS, INSTITUTION OF ELECTRICAL ENGINEERS. STEVENAGE, GB, vol. 140, no. 5, PART J, 1 octobre 1993 (1993-10-01), pages 301-307, XP000412792 ISSN: 0267-3932**
• **PATENT ABSTRACTS OF JAPAN vol. 017, no. 224 (P-1530), 10 mai 1993 (1993-05-10) -& JP 04 355714 A (NIPPON TELEGR & TELEPH CORP <NTT>), 9 décembre 1992 (1992-12-09)**
• **PATENT ABSTRACTS OF JAPAN vol. 2000, no. 09, 13 octobre 2000 (2000-10-13) -& JP 2000 180646 A (FUJITSU LTD), 30 juin 2000 (2000-06-30)**
• **PATENT ABSTRACTS OF JAPAN vol. 2000, no. 03, 30 mars 2000 (2000-03-30) -& JP 11 352347 A (FURUKAWA ELECTRIC CO LTD:THE), 24 décembre 1999 (1999-12-24)**

**Description**

La présente invention concerne un circuit optique intégré comportant un guide de lumière formant au moins une séparation optique, ledit circuit étant communément mis en oeuvre dans des dispositifs appelés séparateur ou recombineur selon les modalités d'utilisation mais pouvant également être mis en oeuvre dans des dispositifs interférométriques. Elle a des applications en optique, notamment pour le routage des faisceaux lumineux.

Les séparateurs/recombineurs optiques, notamment du type communément appelé jonction Y, sont des éléments essentiels des circuits optiques intégrés. Ces séparateurs sont notamment utilisés comme diviseur de puissance optique dans des composants intégrés actifs (modulateurs d'intensité de type Mach-Zehnder) et passifs (séparateurs 1 vers N).

Un guide optique est une structure formée au minimum d'une partie centrale, appelée coeur, d'indice de réfraction supérieur à ses parties voisines, appelées gaines. La particularité d'un guide optique est de pouvoir canaliser la lumière sur un trajet déterminé. Les paramètres du guide optique (largeur du coeur, différence d'indice de réfraction entre le coeur et les gaines) définissent le nombre de solutions permettant le guidage de la lumière. On parle de guide optique monomode lorsqu'il n'existe qu'une solution de propagation et par conséquent une seule répartition transverse possible du champ optique guidé. Dans ce cas, l'onde optique guidée est appelée mode optique fondamental. Lorsqu'il existe plusieurs solutions à l'équation de guidage, on parle alors de modes optiques d'ordres supérieurs dont les répartitions transverses du champ optique sont alternativement symétriques et anti-symétriques. Ces modes d'ordres supérieurs se propagent à des vitesses différentes dans le guide optique ce qui peut engendrer des phénomènes interférentiels parasites, sources d'instabilités optiques. D'une manière générale, le fonctionnement de la jonction Y peut être interprété à partir de l'évolution des modes optiques guidés et radiatifs au cours de la propagation de la lumière. On pourra se référer à l'article de H. Yajima, « Coupled mode analysis of dielectric planar branching waveguide", IEEE Journal of Quantum Electronics, vol.14, n°10, octobre 1978, si l'on souhaite plus de détails à ce sujet.

Une jonction Y peut être caractérisée par plusieurs critères de qualité, notamment pertes optiques, équilibre optique entre les branches de sortie, encombrement et stabilité en longueur d'onde, de préférence la meilleure possible. Or, pour des raisons que l'on va maintenant voir, il est difficile d'obtenir de bonnes caractéristiques pour tous ces critères.

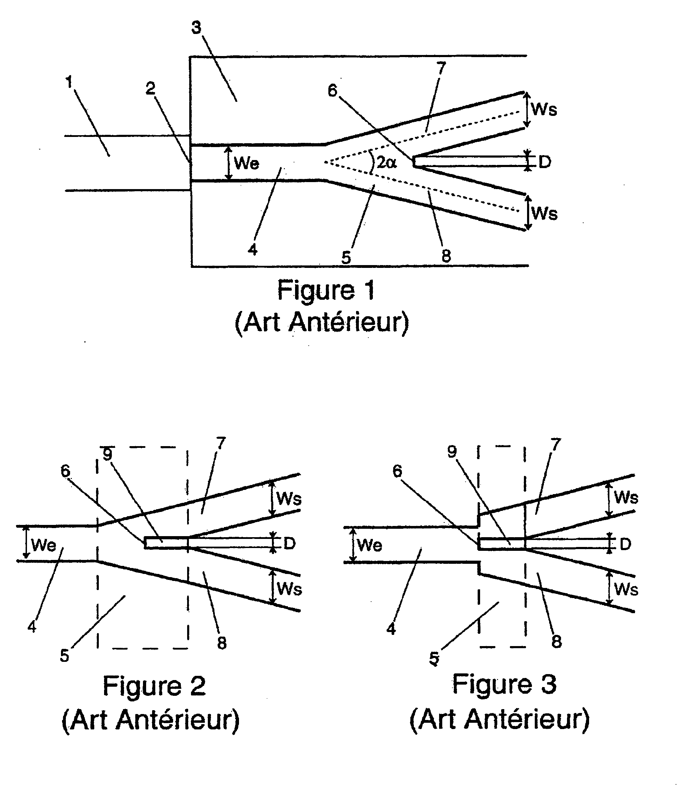

La figure 1 de l'état de la technique schématise un dispositif mettant en oeuvre une fibre optique couplée à un circuit optique intégré avec une jonction Y conventionnelle. L'onde optique guidée provenant de la fibre optique 1 est injectée au niveau de l'interface 2 à l'entrée du circuit optique intégré dont le guide optique est fabriqué sur un substrat planaire 3. L'onde optique couplée à l'interface 2 entre les milieux 1 et 4 se propage d'abord à travers un guide optique commun 4 ou tronc commun 4 avant de passer ensuite dans une zone 5 « taper », que l'on appellera dans la suite zone conique, et dont la largeur varie progressivement de We vers 2Ws+D. Cette zone conique 5, qui prend fin au niveau d'une discontinuité 6 entre des branches indépendantes divergentes 7 et 8, constitue une préparation géométrique à la séparation optique entre les guides optiques des branches 7 et 8 appelées respectivement branches supérieure et inférieure, orientées d'un angle $\pm\alpha$ par rapport à l'axe de propagation du guide dans sa partie commune ou tronc commun 4. La discontinuité 6 de largeur D est une conséquence des limitations en résolution des procédés technologiques de fabrication. Dans la pratique, cette discontinuité possède des dimensions de l'ordre du micromètre voir dixième de micromètre.

Dans un dispositif à jonction Y conventionnelle comme celui représenté figure 1, le mécanisme des pertes et instabilités optiques apparaît principalement en trois endroits. D'abord au niveau de l'interface 2 à cause de la désadaptation de forme entre le champ optique d'entrée, celui de la fibre 1, et le mode optique fondamental supporté par le tronc commun 4. Puis sur la discontinuité 6 où le mode optique fondamental peut se coupler sur les modes optiques d'ordres supérieurs ou radiatifs à cause de la discontinuité 6 en propagation. Enfin, le long des branches 7 et 8 à cause de l'angle de séparation $2\alpha$ entre les deux branches.

Les pertes au niveau de l'interface 2 peuvent être améliorées en utilisant un « taper » d'adaptation entre les deux modes optiques. En ce qui concerne la stabilité dans le tronc commun 4 précédant la séparation entre les branches, la largeur We est ajustée de manière à ne supporter que le mode optique fondamental. Comme l'explique l'article de A. Klekamp, P. Kersten et W. Rehm, "An improved single-mode Y-branch design for cascaded 1:2 splitters", Journal of Lightwave Technology, vol. 14, n°12, décembre 1996, la stabilité sur l'équilibre en sortie de jonction Y est améliorée en réduisant la largeur du tronc commun 4 sur une certaine portion rectiligne appelée filtre optique spatial monomode. En effet, dans le cas d'une injection imparfaite, l'onde optique extérieure issue de la fibre 1 étant injectée avec un angle et un décalage transverse par rapport au tronc commun 4, une fraction du mode optique supérieur d'ordre 1 (anti-symétrique) peut être excité avec le mode optique fondamental dans le tronc commun 4. Si la largeur We est suffisamment faible pour que le guide optique soit strictement monomode, le mode optique parasite est diffracté dans le substrat 3 au cours de la propagation dans le tronc commun 4 avant d'atteindre la zone conique 5. La structure est alors plus stable dans les conditions réelles d'utilisation.

Au niveau de la discontinuité 6 et des branches 7 et 8, les pertes optiques et la stabilité des jonctions Y peuvent être améliorées si l'angle de séparation devient très faible (typiquement 0,1°) puisque l'adiabatisme d'une jonction Y est sensible à l'angle de séparation 2α. Lorsque cet angle s'approche de 0°, le comportement optique de la jonction se stabilise et les pertes optiques diminuent. Toutefois, ce raisonnement ne respecte pas le critère d'encombrement car les longueurs des branches nécessaires avec de tels angles pour obtenir une séparation suffisante des guides optiques de branche sont rapidement rédhibitoires. En pratique, il faut compter un encombrement longitudinal de 14,3mm pour un angle de 0,1° et une séparation finale de 25μm entre les centres des branches de sortie. De plus, la discontinuité 6 dans la zone conique 5 produit une excitation des modes optiques d'ordres supérieurs nuisant à la stabilité de la jonction Y, ceci même dans le cas d'une ouverture adiabatique. En effet, la partie terminale de la zone conique 5 est toujours caractérisée par une largeur de guide importante 2Ws+D pouvant supporter plusieurs modes d'ordre optiques supérieurs.

Pour limiter ce dernier problème, il a été proposé dans la demande de brevet WO97/32228 une solution qui est représentée sur la Figure 2 de l'état de la technique. La jonction Y y est caractérisée par un décalage de la discontinuité 6 vers l'intérieur de la zone conique 5 en créant une ouverture 9 possédant un indice plus faible que le coeur du guide optique. Toutefois, cette solution n'élimine pas de manière satisfaisante l'excitation des modes optiques d'ordres supérieurs et les pertes optiques. De plus, l'encombrement géométrique n'est pas réduit par rapport à une jonction Y classique.

A titre d'amélioration, la solution présentée dans la demande de brevet WO02/071112 de D. Sciancalepore et S. Renoldi et représentée sur la Figure 3 de l'état de la technique, propose de tronquer la zone conique dans sa première partie qui est une source d'instabilités optiques et d'encombrement inutile d'après les auteurs. Avec cette dernière solution, la discontinuité 6 coïncide avec la zone de transition entre le tronc commun 4 et les branches 7 et 8. Les largeurs des branches 7 et 8 en entrée de zone conique et le paramètres D sont adaptés de manière à créer une continuité des champs optiques entre le tronc commun 4 et l'entrée de la zone conique 5. Il est expliqué dans WO02/071112 que la discontinuité du guide optique apparaît au niveau d'une portion étudiée pour être monomode, ce qui accroît la stabilité de la jonction Y.

Malgré cette amélioration et toutes les précautions prises, la discontinuité entre le tronc commun 4 et la zone conique 5 reste une source potentielle de pertes et d'instabilités optiques par couplage sur des modes optiques radiatifs et des modes optiques d'ordres supérieurs.

On connaît également un certain nombre d'autres documents du domaine de l'invention.

Ainsi, le document EP-0716336A et l'article de VINCHANT J.F et al. « INP DIGITAL OPTICAL SWITCH GUIDED-WAVE PHOTONIC SWITCHING" IEE proceedings J. optoelectronics Vol. 140 N. 5 part J p. 301-307 montrent une structure à guides optiques discontinus et à tronc commun d'entrée.

Le document JP-11-352347 montre une structure optique dont les guides optiques doivent supporter les deux premiers modes optiques d'où une dépendance à la longueur d'onde et à la polarisation contrairement à la présente invention qui va être présentée à la suite et dans laquelle on met en oeuvre une évolution modale adiabatique du mode fondamental et non pas un couplage entre les deux premiers modes optiques comme dans ce document.

Les documents JP-04-355714 et DE-4225085 apparaissent encore basés sur un couplage de modes optiques comme pour le document précédent.

Enfin, le document JP-2000-180646 montre une structure à guides d'onde discontinus ou avec d'autres conformations complexes entraînant des perties optiques notamment par diffraction.

La présente invention propose d'éliminer ce problème de discontinuité qui est responsable d'une part de pertes optiques et d'autre part d'instabilités optiques dans la jonction Y. La solution proposée consiste à reporter la discontinuité rencontrée au niveau de la zone conique vers et à l'interface faisant la connexion avec le milieu extérieur, donc sur l'entrée du tronc commun de guidage optique. Dans ce cas, le tronc commun formant le tronc initial de la jonction Y constitue une préforme à la séparation optique, ce qui garanti par construction géométrique une continuité du champ optique propagé au niveau de la séparation des branches.

Ainsi, l'invention concerne un circuit optique intégré à séparation de guides d'onde sur un substrat, le circuit comportant au moins une unité de séparation optique, l'unité comportant une interface d'entrée/sortie optique destinée à être en relation avec un moyen de guidage externe d'une onde lumineuse, l'interface se prolongeant dans le circuit par une section d'entrée de guidage optique de longueur L1 déterminée se poursuivant par au moins deux branches de guide optique s'écartant l'une de l'autre sensiblement symétriquement par rapport à la direction générale de la section d'entrée.

Selon l'invention, la section d'entrée comporte autant de guides optiques qu'il y a de branches, (chaque branche est la poursuite d'un guide optique de la section d'entrée) les guides optiques de la section d'entrée étant sensiblement rectilignes et parallèles entre eux, deux guides optiques adjacents de la section d'entrée étant séparés par une ouverture de largeur D déterminée, l'indice de réfraction de l'ouverture étant inférieur à celui des guides optiques, chaque guide optique de la section d'entrée ayant une largeur We1 déterminée, et chaque guide optique de branche présente une largeur s'accroissant en s'éloignant de la section d'entrée depuis la largeur We1 jusqu'à une largeur Ws déterminée.

Dans divers modes de mise en oeuvre de l'invention, les moyens suivants pouvant être utilisés seuls ou selon toutes les combinaisons techniquement possibles, sont employés :

- l'unité comporte en outre une zone de transition de longueur L0 entre l'interface et la section d'entrée, la zone de transition comportant des guides optiques en continuité de ceux de la section d'entrée, chacun des guides optiques de la zone de transition ayant une largeur s'accroissant en s'éloignant de l'interface depuis une largeur We0 déterminée jusqu'à la largeur We1, et en ce que l'ouverture séparant deux guides optiques adjacents de la zone de transition présente une largeur s'accroissant en s'éloignant de l'interface depuis une largeur D' déterminée jusqu'à la largeur D,

- la variation de la largeur des guides optiques des branches est linéaire en fonction de la distance de propagation.
- la longueur L1 de la section d'entrée est comprise jusqu'à 10mm
- le demi-angle $\alpha$ de séparation des branches est compris entre 0,1° et 0,50° et est de préférence d'environ 0,175°, (l'angle de séparation des branches est 2$\alpha$) dans le cas de deux branches
- le moyen de guidage externe est une fibre optique accolée sur l'interface du circuit optique intégré,
- le substrat du circuit optique intégré est choisi parmi le verre, un semi-conducteur, un polymère, un matériau ferroélectrique notamment du niobate de lithium (LiNb03) ou du tantalate de lithium (LaTiO3),
- le substrat du circuit optique intégré est choisi parmi le niobate de lithium (LiNb03) ou le tantalate de lithium (LaTiO3),
- le substrat du circuit optique intégré est en niobate de lithium (LiNb03),
- le substrat du circuit optique intégré en niobate de lithium (LiNbO3) est en coupe X,
- le substrat du circuit optique intégré en niobate de lithium (LiNb03) est en coupe Y,
- le substrat du circuit optique intégré en niobate de lithium (LiNb03) est en coupe Z,
- les guides optiques ont été obtenus par une technique de diffusion de titane dans un substrat du circuit optique intégré en niobate de lithium (LiNb03),
- les guides optiques ont été obtenus par une technique d'échange protonique dans un substrat du circuit optique intégré en niobate de lithium (LiNb03),
- les guides optiques ont été obtenus par une technique de diffusion de titane dans un substrat du circuit optique intégré en niobate de lithium (LiNbO3) avec une coupe X,
- le circuit est destiné à fonctionner en sens direct en tant que séparateur,
- le circuit est destiné à fonctionner en sens inverse en tant que recombineur,
- le circuit est destiné à fonctionner en sens direct et/ou en sens inverse en tant que séparateur/recombineur,
- le circuit est un séparateur/recombineur optique en Y à deux branches,
- le circuit est un séparateur/recombineur optique en Y à trois branches, une des branches étant centrale sur l'axe de symétrie des guides optiques du circuit,
- le circuit est un séparateur/recombineur optique en Y à quatre branches,
- le circuit optique comporte une unité de séparation et il est un séparateur/recombineur optique en Y à au moins deux branches,
- le circuit optique comporte deux unité de séparation cascadées montées tête-bêche et il est un interféromètre de Mach-Zehnder intégré à au moins deux branches,
- le circuit optique intégré comporte deux unités de séparation cascadées montées tête-bêche et il est un interféromètre de Mach-Zehnder intégré à deux branches,
- le circuit optique intégré comporte deux unités de séparation cascadées montées tête-bêche et il est un interféromètre de Mach-Zehnder intégré à quatre branches,
- le circuit optique comporte deux unités de séparation cascadées montées tête-bêche, des électrodes en relation avec les guides optiques des branches et il est un modulateur interférométrique de Mach-Zehnder intégré à au moins deux branches.

Les avantages associés à l'utilisation d'une jonction selon l'invention sont multiples. Premièrement, réduction des sources de pertes et d'instabilités optiques par rapport à une jonction Y conventionnelle : les deux sources de pertes et d'instabilités optiques qui sont générées dans un premier temps au niveau de l'insertion d'un signal optique externe dans le guide optique d'entrée, donc à l'interface, puis dans un second temps à la discontinuité dans la zone conique dans des circuits classiques, se résument avec l'invention à une seule source de pertes optiques, à l'insertion et donc à un unique problème d'optimisation de l'interface. Deuxièmement, la structure optique proposée offre l'avantage de pouvoir améliorer l'équilibre de la jonction Y. En effet, la section d'entrée de guidage qui est constituée de deux (au moins) guides optiques sensiblement parallèles et droits forme une superstructure optique donc les propriétés modales sont équivalentes à celles d'un guide optique unique de largeur plus faible que la somme des largeurs des deux guides optiques pris séparément. La section droite d'entrée agît donc comme un filtre optique spatial monomode qui élimine les modes optiques parasites résultants d'une injection imparfaite entre le signal extérieur et le guide d'entrée et qui sont susceptibles de modifier l'équilibre optique de la jonction Y. Troisièmement, en terme d'encombrement longitudinal, le gain est également perceptible puisque la zone conique adiabatique a disparu pour laisser place à une séparation directe. L'expression du gain en encombrement par rapport à une jonction Y classique se calcule selon la formule suivante : X= (D + We1)/(2.tan$\alpha$), et on constate que le gain de place augmente lorsque l'angle de séparation diminue. Par exemple pour un demi-angle de séparation $\alpha$=0,15°, le gain longitudinal par rapport à une jonction Y classique est de l'ordre de 22%. L'invention proposée permet donc d'améliorer simultanément de nombreux critères de qualité d'une jonction Y.

La présente invention va maintenant être exemplifiée sans pour autant en être limitée avec la description qui suit en relation avec les figures suivantes:

la Figure 1 de l'état de la technique représentant schématiquement un dispositif avec une fibre optique en entrée suivi d'un circuit optique intégré comportant une jonction Y conventionnelle,

la Figure 2 de l'état de la technique représentant schématiquement une jonction Y avec une ouverture dans la zone conique,

la Figure 3 de l'état de la technique représentant schématiquement une jonction Y avec élimination partielle de la zone conique et adaptation optique entre les guides optiques communs et ceux des branches,

la Figure 4 qui représente schématiquement un dispositif constitué d'une fibre optique en entrée et d'un circuit optique intégré comportant une unité de séparation à type de jonction Y selon l'invention,

la Figure 5 qui représente un dispositif constitué d'une fibre optique en entrée et d'un circuit optique intégré comportant une variante d'une unité de séparation à type de jonction Y selon l'invention,

la Figure 6 représente un dispositif constitué d'une fibre optique en entrée et d'un circuit optique intégré comportant une extension à trois sorties de la jonction Y selon l'invention,

la Figure 7 qui représente une première application de jonctions Y selon l'invention dans un interféromètre de type Mach-Zehnder,

la Figure 8 qui représente une deuxième application de jonctions Y selon l'invention dans un séparateur et recombineur de puissance optique pouvant notamment être utilisé dans des gyromètres à fibre optique,

la Figure 9 qui représente une variante de la figure 7 avec la mise en parallèle de deux interféromètres de type Mach-Zehnder à l'intérieur d'un interféromètre principal, et

la Figure 10 qui représente d'une série de mesures expérimentales comparatives de pertes optiques de jonctions Y.

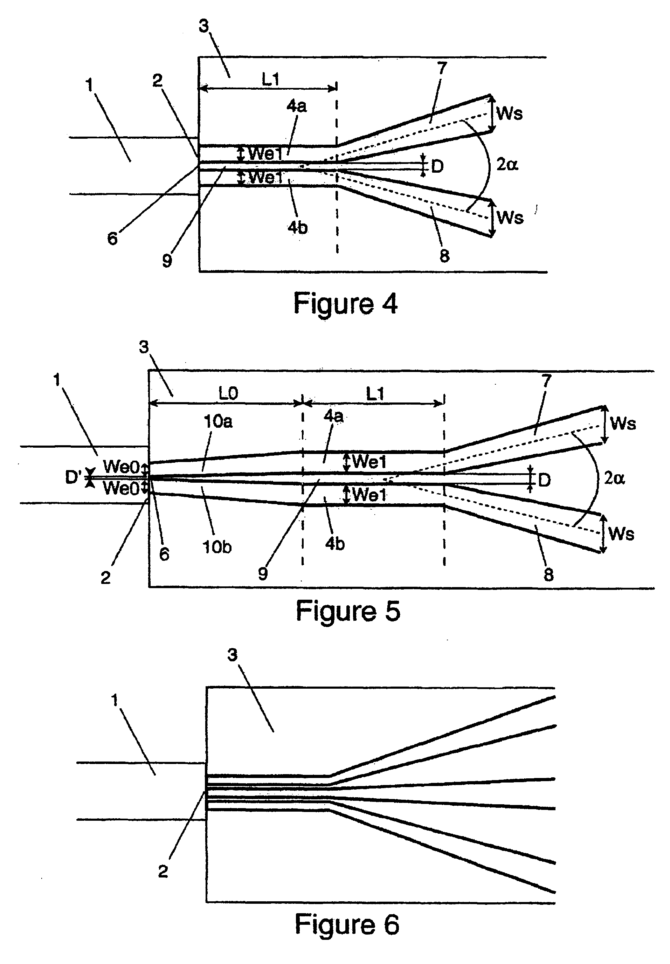

Les Figures 1 à 3 de l'état de la technique ayant été présentées dans la partie introductive du présent document, la présente invention va maintenant être décrite en relation avec la Figure 4. Le dispositif type jonction Y qui y est présenté est constitué par un circuit optique intégré sur un substrat 3. Une fibre optique 1 est accolée au circuit optique. Une transition optique est formée à l'interface 2, qui peut être perpendiculaire comme représentée, de préférence inclinée (faces d'injection biseautées) pour éliminer les réflexions parasites entre la fibre optique 1 et les extrémités des guides optiques 4a et 4b réalisés dans le circuit optique intégré. La lumière de la fibre optique 1 qui est injectée sur l'entrée du circuit optique au niveau de l'interface 2 passe dans les guides 4a et 4b du circuit optique intégré et parcourt une section d'entrée de guidage de longueur L1, les deux guides optiques 4a et 4b dans cette section d'entrée étant sensiblement droits et parallèles entre-eux et chacun de largeur We1. Sur l'interface 2 apparaît dans le circuit optique une discontinuité 6 qui est à l'extrémité d'une ouverture 9 séparant les deux guides optiques 4a et 4b de la section d'entrée, l'ouverture 9 et donc la discontinuité 6 à son extrémité, ont une de largeur D et ont des propriétés optiques qui se distinguent de celles des guides optiques 4a et 4b. L'indice de réfraction de la discontinuité 9 et de l'ouverture 9 est inférieur à celui des guides optiques 4a et 4b. La largeur We1 de chaque guide optique 4a et 4b et l'espacement D sont ajustés de manière à ce que la superstructure formée par l'ensemble des deux guides 4a et 4b ne puisse guider que le mode optique fondamental à la longueur d'onde de travail. La longueur de la section d'entrée L1 est fixée suivant les besoins en stabilité et équilibre optique recherchés en sortie de jonction Y. Elle peut varier jusqu'à plusieurs millimètres. A la suite de la section d'entrée de longueur L1 se trouve une zone de séparation de branches formée par l'écartement progessif d'une branche supérieure 7 et d'une branche inférieure 8 de guides optiques qui sont orientées d'un angle $\pm\alpha$ par rapport à l'axe de symétrie porté par la direction générale de la section d'entrée. Les guides optiques formant les branches 7 et 8 s'éloignent l'un de l'autre et s'élargissent progressivement pour atteindre chacun une largeur finale Ws pour soit atteindre une face de sortie du circuit optique intégré, soit continuer leurs trajets propres avec cette largeur Ws. D'une manière plus générale, les branches supérieure 7 et inférieure 8 représentent l'extension des guides optiques 4a et 4b et la zone de séparation peut être interprétée comme une évolution de la superstructure optique d'entrée où les paramètres internes (largeurs des guides optiques et espacement entre les deux guides optiques) évoluent au cours de la propagation. Dans le cas présenté sur la figure 4, l'évolution des largeurs des guides optiques et d'espacement entre les guides optiques est linéaire mais dans des variantes non représentées, des évolutions non linéaires des largeurs et/ou espacement sont considérées.

Le profil de la zone de séparation est conçu de manière à limiter au maximum, d'une part les pertes optiques dues au couplage du mode fondamental sur le continuum des modes radiatifs et d'autre part aux instabilités dues au couplage sur des modes d'ordres supérieurs. Le comportement de la lumière dans de telles structures optiques peut être interprété à partir de l'évolution des supermodes optiques. Dans ce type de structures, les modes optiques guidés et radiatifs sont liés par des équations de propagation couplées. Les coefficients de couplage de ces équations sont approximés par simplification de la séparation continue en une série discrète de sections rectilignes placées bout à bout. Dans ce cas, les coefficients de couplage sont proportionnels aux intégrales de recouvrement entre les modes optiques au niveau de chaque transition élémentaire entre les sections:

$$I_{mn}^{i \to i+1} = \int E_m^i E_n^{i+1}$$

où $E_m^i$ caractérise l'amplitude du mode optique d'ordre m dans la section *i*, $E_n^{i+1}$ l'amplitude du mode optique d'ordre n dans la section *i+1* et $I_{mn}^{i \to i+1}$ l'intégrale de recouvrement liée au coefficient de couplage du mode optique m sur le mode n.

Il est alors évident que le nombre de modes optiques susceptibles d'être guidés définit le niveau de risque de couplage de l'énergie du mode fondamental sur les modes guidés d'ordre supérieurs. La séparation est alors conçue de manière à ne jamais supporter plus de deux modes optiques (mode fondamental et anti-symétriques d'ordre 1). Un logiciel de résolution numérique des équations de propagation basé sur la "méthode des faisceaux propagés" (BPM pour "Beam Propagation Method" en terminologie anglaise) peut être utilisé pour simuler et estimer de manière théorique les pertes optiques ainsi que le couplage éventuel sur des modes d'ordre supérieurs dans ce type de structure.

On parle dans ce cas de séparation adiabatique puisque la totalité de l'énergie du mode optique fondamental en entrée est conservée au cours de la propagation dans la séparation. En sortie de séparation, la puissance optique est alors équitablement partagée sur chacune des branches 7 et 8. La zone de séparation, caractérisant la seconde partie de la jonction Y, est une simple évolution de la superstructure optique initiale où chaque guide optique s'élargit et s'éloigne par rapport à son voisin. Les paramètres de largeur et d'éloignement sont calculés en fonction de critères prédéterminés tels que les pertes optiques et l'encombrement. Cette seconde partie de la jonction Y s'inscrit donc dans la continuité de la partie initiale. En d'autres termes, la jonction Y de l'invention peut être perçue comme une structure optique symétrique dont les branches supérieure et inférieure sont étirées jusqu'à l'entrée du circuit optique intégré.

La figure 5 présente un dispositif mettant en oeuvre une variante de réalisation de séparation optique intégrée sur un circuit optique. Dans cette variante, la partie initiale des guides optiques est pourvue d'une zone d'ajustement progressif de la largeur et de la distance les séparant afin de trouver le meilleur compromis entre les pertes optiques par désadaptation de forme avec le signal extérieur provenant d'une fibre optique par exemple, les pertes en propagation et le filtrage optique spatial monomode. Cette dernière structure, part de l'hypothèse que les conditions géométriques de la superstructure optique favorisant le recouvrement optique à l'interface entre la fibre et le circuit optique intégré ne vont pas forcément correspondre aux conditions géométriques optimales de pertes optiques en propagation dans la partie initiale de la jonction Y. La lumière issue d'une fibre optique 1 est injectée en entrée de circuit optique intégré sur un substrat 3 au niveau de l'interface 2 formant la zone de transition. La superstructure optique initiale précédant la zone d'écartement des deux branches est divisée en deux sections, première section de longueur L0 puis seconde section de longueur L1. La première section est une zone de transition qui joue le rôle d'adaptateur optique entre le signal optique issu de la fibre 1 et le mode optique fondamental guidé de la seconde section. Cette première section est constituée de deux guides optiques supérieur 10a et inférieur 10b qui sont en correspondance avec ceux respectifs de la seconde section puis, ensuite, leurs branches respectives et dont les largeurs varient de We0 au niveau de l'interface 2 formant la zone de transition, à We1 à l'entrée de la seconde section. Parallèlement, l'ouverture 9 entre les guides voit sa valeur évoluer de D' au niveau de l'interface 2 formant la zone de transition à D au niveau l'entrée de la seconde section (D' < D). Les dimensions initiales de la superstructure optique, We0 et D', sont adaptées dans le but de minimiser les pertes optiques d'insertion avec le signal extérieur issu de la fibre optique.

L'optimisation passe par la maximisation du taux de recouvrement entre les répartitions des champs électriques

$$\eta = \frac{\left| \int E_1 E_2^* \right|^2}{\int |E_1|^2 \int |E_2|^2}$$

où $E_1$ et $E_2$ correspondent respectivement à l'amplitude du mode optique de la fibre et à l'amplitude du mode optique fondamental de paramètres We0 et D'. Les valeurs sont bornées entre 0, dans le pire des cas, et 1, dans le cas d'une superposition parfaite entre les champs optiques. Les modes optiques et le taux de recouvrement peuvent être calculés à l'aide d'un logiciel de résolution numérique basé sur la méthode des différences finies.

La seconde section a pour rôle de filtrer spatialement les modes optiques parasites susceptibles d'être excités par l'injection de lumière issue de la fibre optique tout en confinant suffisamment le mode optique fondamental pour ne pas engendrer de pertes optiques supplémentaires. Cette seconde section est formée de deux guides optiques parallèles qui viendront en correspondance avec leurs branches supérieur 4a et inférieur 4b respectif. La longueur L1 et les paramètres We1 et D caractérisant le filtre spatial monomode sont calculés de manière à minimiser les instabilités comme le déséquilibre optique entre les branches 7 et 8.

Le processus d'optimisation correspondant fait appel à l'utilisation d'outils de simulation numérique de type "méthode des faisceaux propagés". Le principe consiste à reproduire une injection imparfaite de lumière par un décalage de quelques micromètres du centre transverse de la fibre par rapport au centre du guide d'injection. On calcule ensuite le déséquilibre en sortie entre les bras 7 et 8 par la formule P7/(P7+P8) ou P8/(P7+P8) puis on se fixe une limite en accord avec la place disponible sur le circuit et les tolérances d'alignement. On peut toutefois remarquer que plus la distance L1 est grande, meilleure sera l'équilibre entre les bras de sortie.

Dans la zone de séparation des branches 7 et 8, les guides optiques associés aux branches supérieure 7 et inférieure 8 s'éloignent en étant orientés d'un angle $\pm\alpha$ par rapport à l'axe de symétrie des guides optiques du circuit. Leurs largeurs respectives évoluent de We1 à Ws comme précédemment.

Ainsi, l'invention dans sa généralisation concerne un circuit optique intégré sur un substrat planaire comportant des moyens de guidage optiques formant au moins une séparation optique appelée jonction Y. Les moyens de guidage optiques de la partie initiale de la jonction Y sont formés d'autant de guides optiques parallèles que de branches en sortie de jonction Y. Cette partie initiale préparant la séparation des branches forme une superstructure optique dont les caractéristiques géométriques, telles que la largeur et la distance de séparation des guides optiques parallèles, sont choisies de manière à vérifier les conditions de monomodalité et d'adaptation au signal optique provenant de l'extérieur au circuit optique intégré.

Le principe de séparation du guide optique développé pour une jonction Y à une entrée et deux sorties est généralisable à une entrée et de multiples sorties dans la limite des résolutions atteignables par la technologie. Afin de montrer le principe de généralisation à N sorties de l'invention, un exemple est donné sur la Figure 6 avec un dispositif appelé séparateur 1 vers 3. Le signal extérieur issu de la fibre optique 1 pénètre dans le circuit optique intégré 3 dans la superstructure optique composée de trois guides optiques parallèles. Les paramètres structurels tels que la largeur et l'écartement entre les guides optiques sont adaptés de manière à rendre la superstructure optique compatible avec le mode optique de la fibre d'entrée et de manière à ce que le circuit ne supporte que le mode optique guidé fondamental. Dans toutes les variantes possibles on gardera à l'esprit qu'il est souhaitable que la structure réalisée soit essentiellement symétrique.

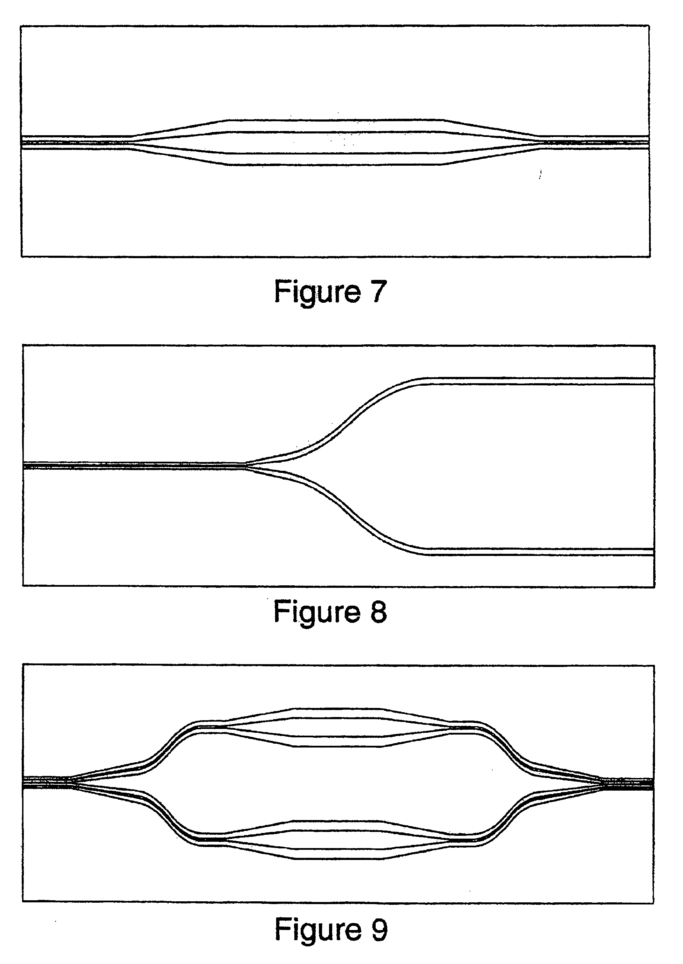

Le dispositif exemplifié jusqu'à présent concerne un circuit optique intégré sur substrat avec au moins une jonction Y fonctionnant en sens direct, c'est à dire en qualité de séparateur de guide optique, mais le principe reste applicable à une jonction Y fonctionnant en sens inverse, c'est à dire en recombineur de guide optique. Ainsi, l'invention est susceptible de trouver de nombreuses applications pratiques dans des circuits optiques intégrés aux fonctionnalités les plus diverses et plusieurs exemples sont donnés sur les figures 7, 8 et 9.

La figure 7 présente un premier exemple d'application avec un circuit optique intégré sur substrat avec deux jonctions Y de l'invention disposées en cascade, tête-bêche, et reliées entre-elles. La première jonction joue le rôle de diviseur (séparateur) de puissance optique tandis que la seconde joue le rôle de recombineur de puissance optique. La structure optique globale résultante forme un interféromètre appelé interféromètre de Mach-Zehnder intégré. Dans ce cas, l'invention offre un avantage supplémentaire par rapport aux jonctions Y conventionnelles puisque le filtre optique spatial monomode qui participait à l'amélioration de la stabilité en fonctionnement direct peut servir, en fonctionnement inverse, à l'amélioration du taux d'extinction. Le mode optique anti-symétrique radiatif en sortie de recombineur est plus facilement diffracté hors du guide optique grâce à une largeur équivalente de guide plus faible.

La figure 8 présente un deuxième exemple d'application avec un circuit optique intégré qui peut être utilisée comme diviseur/recombineur, notamment pour des applications dans les gyromètres à fibre optique basés sur l'effet interférométrique de Sagnac.

La figure 9 présente un troisième exemple d'application avec un circuit optique intégré qui reprend pour base principale le circuit de la figure 8. La structure optique est néanmoins plus complexe car chaque branche du premier Mach-Zehnder est le siège d'une seconde structure du même type obtenue par un dédoublement.

Ces exemples avec mise en cascade de plusieurs jonctions Y et/ou dédoublement sont une simple démonstration des possibilités de mise en oeuvre de l'invention.

On doit noter que les dimensions géométriques de la jonction Y étant adaptables, le circuit optique intégré de l'invention peut s'appliquer à n'importe qu'elle longueur d'onde optique à partir du moment où la lumière est guidée dans le circuit.

Parmi les modalités possibles de réalisation du circuit optique intégré on peut considérer l'utilisation de tout type de substrat à partir du moment où celui-ci est susceptible de supporter des guides optiques. Ainsi, l'invention s'applique, entre autres, aux circuits optiques intégrés sur verre, sur semi-conducteurs, sur polymères, sur matériaux ferroélectriques de type niobate de lithium (LiNb03) ou tantalate de lithium (LaTiO3). Le cas particulier qui est présenté à titre d'exemple concerne l'application de l'invention à un circuit optique intégré sur substrat de niobate de lithium.

Le niobate de lithium est un cristal couramment utilisé pour la fabrication de circuits optiques intégrés actifs basés sur l'effet électro-optique ou acousto-optique. Parmi ses propriétés, on notera son appartenance à la classe des cristaux biréfringents uniaxiaux: l'axe cristallographique Z correspond à l'axe optique, noté axe extraordinaire d'indice $N_e$, tandis que les deux autres axes, X et Y correspondent aux axes ordinaires d'indice $N_o$. En pratique, les guides optiques sont fabriqués en surface sur des substrats pouvant posséder les trois orientations cristallographiques principales, c'est-à-dire les substrats dits «coupe X», dont l'axe X est perpendiculaire à la surface, dits «coupe Y», dont l'axe Y est perpendiculaire à la surface, qui sont connus pour leur stabilité en température, ou dits «coupe Z», dont l'axe Z est perpendiculaire à la surface, qui sont caractérisés par une forte dépendance à l'effet pyro-électrique mais aussi par une meilleure efficacité électro-optique.

Actuellement, deux technologies appliquées à l'échelle industrielle permettent de fabriquer des guides optiques sur niobate de lithium : la diffusion de titane et l'échange protonique. Notons que d'autres techniques de fabrication moins classiques comme l'implantation ionique ou la gravure du niobate de lithium peuvent également convenir à l'invention.

La diffusion de titane est un procédé qui consiste à élever localement les indices de réfraction $N_e$ et $N_o$ en créant un dopage du réseau cristallographique de l'hôte, en l'occurrence LiNbO3. Le dopage est réalisé par diffusion thermique à très haute température, typiquement de 900°C à 1150°C. L'échange protonique est un procédé d'élévation locale de l'indice extraordinaire $N_e$ par l'intermédiaire d'une réaction chimique de substitution. En mettant en contact le niobate de lithium avec de l'acide chaud, pur ou dilué, les ions lithium du cristal proches de la surface sont progressivement remplacés par des protons. Après l'opération d'échange, le substrat peut être recuit pour adoucir et stabiliser le profil d'indice.

Afin de vérifier la validité de l'invention proposée, plusieurs circuits optiques intégrés comportant différentes jonctions Y ont été réalisés sur niobate de lithium. Le schéma du circuit optique sélectionné correspond à celui de la figure 7, c'est à dire un interféromètre de Mach-Zehnder. Les guides optiques ont été fabriqués par la technique de diffusion de titane sur un substrat de niobate de lithium en coupe X.

Les différents circuits optiques ont été réalisés au sein d'une même plaquette afin de garantir un traitement identique. Les paramètres géométriques tels que We1, D et Ws ont été fixés à partir de précédents tests et dans le cas présent seul l'angle de séparation et le type de jonction Y varient d'un circuit à l'autre.

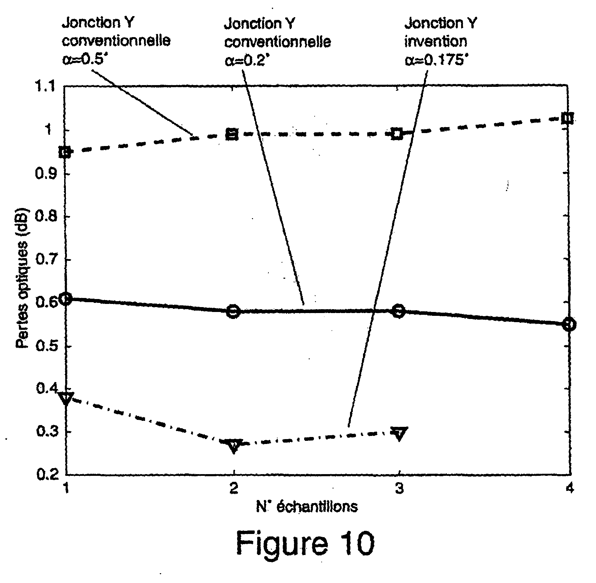

La figure 10 donne les pertes optiques par jonction Y à l'issue des tests à la longueur d'onde de 1550nm. L'estimation des pertes optiques par jonction Y est obtenue en soustrayant les pertes optiques des Mach-Zehnder avec les pertes optiques de guides rectilignes de référence puis en divisant par le nombre de jonction Y, deux dans le cas présent. La courbe en pointillés avec les carrés correspond aux résultats de mesure sur des jonctions Y conventionnelles ayant un demi-angle $\alpha$ de séparation $\alpha$=0,5°. Les pertes par jonctions sont estimées en moyenne à 0,99dB. La courbe continue avec les cercles représente les mesures de jonctions Y conventionnelles possédant un demi-angle $\alpha$ de séparation plus faible, typiquement $\alpha$=0,2°. Les pertes par jonction Y sont en moyenne de 0,58dB. La courbe en traits intermittents avec les triangles est associée aux mesures effectuées sur les jonctions Y de l'invention avec un demi angle $\alpha$ de séparation $\alpha$=0,175°. Les pertes moyennes s'élèvent à 0,31dB par jonction.

Le tableau 1 qui suit donne un comparatif des performances des jonctions Y fabriquées sur la base des critères de sélection tels que l'encombrement géométrique, les pertes optiques et, indirectement, le filtrage optique spatial monomode par le taux d'extinction :

TABLEAU 1

|  | Jonction Y conventionnelle | Jonction Y conventionnelle | Jonction Y de l'invention |
|---|---|---|---|
| $\alpha$ | 0,5° | 0,2° | 0,175° |
| Encombrement longitudinal | -60% | 0% | -11% |
| Pertes optiques | 0,99dB | 0,58dB | 0,31dB |
| Taux d'extinction | 25dB | 22dB | 25dB |

Dans ce tableau 1, la jonction Y conventionnelle avec $\alpha$=0,2° est choisie comme jonction Y de référence pour l'encombrement.

La jonction Y conventionnelle avec un demi-angle $\alpha$ de 0,5° permet de gagner 60% en encombrement longitudinal mais au détriment des pertes optiques. Par contre, la jonction Y de l'invention permet de gagner 11% sur l'encombrement même avec un demi angle de séparation plus faible (0,175° au lieu de 0,20°). Les pertes optiques diminuent également par rapport à la référence.

Les résultats expérimentaux montrent que la jonction Y de l'invention permet de gagner simultanément sur l'encombrement et les pertes optiques alors qu'une jonction Y conventionnelle ne peut améliorer simultanément qu'un seul de ces deux critères. A encombrement équivalent, les résultats obtenus montrent l'efficacité des jonctions Y de l'invention. Les performances affichées reflètent une amélioration combinée de l'efficacité de couplage fibre/guide (gain de 0,15dB obtenu par simulation optique), une réduction des pertes optiques radiatives par élimination de la discontinuité du guide optique au niveau de la séparation et par minimisation de l'angle de séparation 2$\alpha$ entre les deux branches.

Dans les modulateurs d'intensité de type Mach-Zehnder, le taux d'extinction traduit l'efficacité du filtrage optique spatial monomode du pied de la jonction Y. Ce taux s'exprime comme le rapport en décibels entre les niveaux optiques passant et bloquant. Les jonctions Y conventionnelles avec un demi angle de 0,5° sont couramment utilisées pour obtenir un taux d'extinction élevé (25dB). On remarque d'après le tableau 1 que lorsque cet angle $\alpha$ passe de 0,5° à 0,2°, les pertes optiques s'améliorent mais le taux d'extinction se dégrade de 3dB (22dB). Pour retrouver des performances équivalentes, il faut allonger le pied de la jonction Y afin que le mode optique anti-symétrique radiatif soit plus efficacement diffracté dans le substrat. L'amélioration simultanée des pertes optiques et du taux d'extinction d'une jonction Y conventionnelle sous-entend l'augmentation de manière inacceptable de ses dimensions géométriques. La jonction Y de l'invention présente un comportement différent puisque le taux d'extinction reste élevé et équivalent à celui de la jonction conventionnelle classique à demi angle de séparation de 0,5°, même avec un demi-angle de séparation faible $\alpha$=0,175°. Ce phénomène est dû à une largeur de guide équivalente plus faible du pied de la jonction Y résultant de l'invention. Le mode anti-symétrique radiatif est plus facilement diffracté dans le substrat au cours de sa propagation.

En conclusion, lorsque l'angle d'ouverture est fixé, la jonction Y de l'invention s'avère être plus performante que la jonction Y conventionnelle, que ce soit au niveau de l'encombrement, des pertes optiques ou du filtrage optique spatial monomode. Les résultats expérimentaux obtenus sur des interféromètres de Mach-Zehnder apportent une preuve de l'impact que peuvent avoir les jonctions Y de l'invention et il est évident que ces écarts de performances seront d'autant plus importants que le nombre de jonction Y mises en cascade augmentera.

## Revendications

1. Circuit optique intégré à séparation de guides d'onde sur un substrat (3), le circuit comportant au moins une unité de séparation optique, l'unité comportant une interface (2) d'entrée/sortie optique au bord du substrat destinée à être en relation avec un moyen de guidage externe d'une onde lumineuse, l'interface se prolongeant dans le circuit par une section d'entrée de guidage optique de longueur (L1, L1+L0) déterminée se poursuivant par au moins deux branches (7,8) de guide optique s'écartant l'une de l'autre sensiblement symétriquement par rapport à la direction générale de la section d'entrée,
   **caractérisé en ce que** la section d'entrée depuis l'interface au bord du substrat comporte autant de guides optiques (4a,4b) qu'il y a de branches, chacun des guides optiques étant continu depuis l'interface au bord du substrat jusqu'à y compris sa branche correspondante, les guides optiques de la section d'entrée étant sensiblement rectilignes, deux guides optiques adjacents de la section d'entrée étant séparés par une ouverture (9) maximale de largeur D déterminée, l'indice de réfraction de l'ouverture étant inférieur à celui des guides optiques, chaque guide optique de la section d'entrée ayant une largeur maximale We1 déterminée, et **en ce que** chaque guide optique de branche présente une largeur s'accroissant en s'éloignant de la section d'entrée depuis la largeur We1 jusqu'à une largeur Ws déterminée, les largeurs We1 et D étant telles que la superstructure formée par les guides d'entrée et l'ouverture est monomode à la longueur d'onde de travail.

2. Circuit optique intégré selon la revendication 1, **caractérisé en ce que** la section d'entrée comporte en outre une zone de transition de longueur L0 entre l'interface et la fin de la section d'entrée où les guides dans cette fin de section d'entrée sont sensiblement parallèles entre eux, de largeur We$_1$ et séparés par une ouverture de largeur D, la zone de transition comportant des guides optiques (10a,10b) en continuité de ceux de la fin de section d'entrée (4a,4b), chacun des guides optiques de la zone de transition ayant une largeur s'accroissant en s'éloignant de l'interface depuis une largeur We0 déterminée jusqu'à la largeur We1, et **en ce que** l'ouverture (9) séparant deux guides optiques adjacents de la zone de transition présente une largeur s'accroissant en s'éloignant de l'interface depuis une largeur D' déterminée jusqu'à la largeur D.

3. Circuit optique intégré selon la revendication 1 ou 2, **caractérisé en ce que** la variation de la largeur des guides optiques des branches est linéaire en fonction de la distance de propagation.

4. Circuit optique intégré selon l'une quelconque des revendications précédentes, **caractérisé en ce que** la longueur L1 de la section d'entrée est comprise entre 0 non compris et 10mm.

5. Circuit optique intégré selon l'une quelconque des revendications précédentes, **caractérisé en ce que** dans le cas de deux branches le demi-angle $\alpha$ de séparation des deux branches est compris entre 0,1° et 0,50° et est de préférence d'environ 0,175°.

6.  Circuit optique intégré selon l'une quelconque des revendications précédentes, **caractérisé en ce que** le moyen de guidage externe est une fibre optique (1) accolée sur l'interface du circuit optique intégré.

7.  Circuit optique intégré selon l'une quelconque des revendications précédentes, **caractérisé en ce que** le substrat du circuit optique intégré est en niobate de lithium (LiNb03).

8.  Circuit optique intégré selon l'une quelconque des revendications précédentes, **caractérisé en ce qu'**il comporte une unité de séparation et qu'il est un séparateur/recombineur optique en Y à au moins deux branches.

9.  Circuit optique intégré selon l'une quelconque des revendications 1 à 7, **caractérisé en ce qu'**il comporte deux unités de séparation cascadées montées tête-bêche et qu'il est un interféromètre de Mach-Zehnder intégré à au moins deux branches.


## Claims

1.  An optical integrated circuit with waveguide separation on a substrate (3), the circuit comprising at least one optical separating unit, the unit comprising an optical input/output interface (2) at the edge of the substrate intended for being in relation with an external means for guiding a light wave, the interface extending in the circuit through an optical guiding input section of determined length (L1, L1+L0) extended by at least two optical guiding branches (7, 8) mutually spacing apart substantially symmetrically relative to the general direction of the input section, **characterised in that** the input section from the interface at the edge of the substrate includes as many optical guides (4a,4b) as there are branches, each of the optical guides being continuous from the interface at the edge of the substrate up to its corresponding branch inclusive, the optical guides of the input section being substantially rectilinear, two adjacent optical guides of the input section being separated by an aperture (9) of determined maximum width D, the refractive index of the aperture being lower than that of the optical guides, each optical guide of the input section having a determined maximum width We1, and **in that** each branch optical guide exhibits a width increasing in the direction away from the input section from the width We1 up to a determined width Ws, the widths We1 and D being such that the superstructure formed by the input guides and the aperture is monomode at the working wavelength.

2.  An optical integrated circuit according to claim 1, **characterised in that** the input section includes moreover a transition zone of length L0 between the interface and the end of the input section, wherein the guides of the end of the input section are mutually parallel, of width We1 and are separated by an aperture of width D, wherein the transition zone inludes optical guides (10a,10b) continuous with those of the end of the input section (4a,4b), each of the optical guides of the transition zone having a width increasing in the direction away from the interface from a determined width We0 up to the width We1, and **in that** the aperture (9) between two adjacent optical guides of the transition zone has a width increasing in the direction away from the interface from a determined width D' up to the width D.

3.  An optical integrated circuit according to claim 1 or 2, **characterised in that** the variation in width of the optical guides of the branches is linear in relation to the distance of propagation.

4.  An optical integrated circuit according to any of the previous claims, **characterised in that** the length L1 of the input section ranges between 0 excluded and 10mm.

5.  An optical integrated circuit according to any of the previous claims, **characterised in that** in the case of two branches the semi-angle $\alpha$ for separating the branches ranges between 0.1° and 0.50° and is preferably about 0.175°.

6.  An optical integrated circuit according to any of the previous claims, **characterised in that** the external guiding means is an optical fiber (1) bonded to the interface of the optical integrated circuit.

7.  An optical integrated circuit according to any of the previous claims, **characterised in that** the substrate of the optical integrated circuit is made of lithium niobate (LiNbO3).

8.  An optical integrated circuit according to any of the previous claims, **characterised in that** it comprises a separating unit and that it is a Y-shaped optical separator/recombinator with at least two branches.

9. An optical integrated circuit according to any of the claims 1 to 7, **characterised in that** it comprises two cascaded, head to tail mounted separating units and that it is an integrated Mach-Zehnder interferometer with at least two branches.

**Patentansprüche**

1. Optische integrierte Schaltung mit Lichtleitertrennung auf dem Substrat (3), wobei die Schaltung mindestens eine optische Trenneinheit umfasst, die Einheit eine optische Eingabe/Ausgabe-Schnittstelle (2) am Rand des Substrats aufweist, die dazu bestimmt ist, mit externen Lichtleitmitteln verbunden zu werden, wobei sich die Schnittstelle durch einen Lichtleiter-Eingangsabschnitt bestimmter Länge (L1, L1 + L0), der sich auf mindestens zwei Zweigen (7, 8) der Lichtleiter fortsetzt, die sich im Wesentlichen symmetrisch zur Hauptrichtung des Eingangsabschnitts voneinander entfernen, in der Schaltung verlängert,
dadurch gekennzeichnet, dass der Eingangsabschnitt von der Schnittstelle am Rand des Substrats aus so viele Lichtleiter (4a, 4b) umfasst, wie Zweige vorhanden sind, wobei jeder der Lichtleiter von der Schnittstelle am Rand des Substrats aus bis einschließlich zu seinem entsprechenden Zweig durchgehend ist, die Lichtleiter des Eingangsabschnitts im Wesentlichen geradlinig sind, zwei benachbarte Lichtleiter des Eingangsabschnitts durch eine Öffnung (9) einer bestimmten Höchstbreite D getrennt sind, der Brechungsindex der Öffnung kleiner ist als der der Lichtleiter, jeder Lichtleiter des Eingangsabschnitts eine bestimmte Höchstbreite We1 hat, und dadurch, dass jeder Zweiglichtleiter eine Breite aufweist, die sich vom Eingangsabschnitt entfernend von seiner Breite We1 bis zu einer bestimmten Breite Ws vergrößert, wobei die Breiten We1 und D derart sind, dass der Aufbau, der von den Eingangslichtleitern und der Öffnung geformt wird, bei der Arbeitswellenlänge monomodal ist.

2. Optische integrierte Schaltung nach Anspruch 1, dadurch gekennzeichnet, dass der Eingangsabschnitt außerdem eine Übergangszone der Länge L0 zwischen der Schnittstelle und dem Ende des Eingangsabschnitts umfasst, wo die Leiter in diesem Ende des Eingangsabschnitts im Wesentlichen parallel zueinander, der Länge We1 und durch eine Öffnung der Breite D getrennt sind, wobei die Übergangszone Lichtleiter (10a, 10b) umfasst, die mit denen am Ende des Eingangsabschnitts (4a, 4b) in Kontinuität sind, wobei jeder der Lichtleiter der Übergangszone eine Breite aufweist, die sich von der Schnittstelle entfernend von einer bestimmten Breite We0 bis zur Breite We1 vergrößert, und dadurch, dass die Öffnung (9), die zwei benachbarte Lichtleiter der Übergangszone trennt, eine Breite aufweist, die sich von der Schnittstelle entfernend von einer bestimmten Breite D' bis zur Breite D vergrößert.

3. Optische integrierte Schaltung nach Anspruch 1 oder 2, dadurch gekennzeichnet, dass die Breitenänderung der Lichtleiter der Zweige abhängig von der Ausbreitungsentfernung linear ist.

4. Optische integrierte Schaltung nach einem der vorherigen Ansprüche, dadurch gekennzeichnet, dass die Länge L1 des Eingangsabschnitts wischen ausschließlich 0 und 10 mm liegt.

5. Optische integrierte Schaltung nach einem der vorherigen Ansprüche, dadurch gekennzeichnet, dass im Fall von zwei Zeigen der Halbwinkel a der Trennung der zwei Zweige zwischen 0,1° und 0,50° liegt, und bevorzugt etwa 0,175° beträgt.

6. Optische integrierte Schaltung nach einem der vorherigen Ansprüche, dadurch gekennzeichnet, dass das externe Leitmittel eine Lichtleitfaser (1) ist, die mit der Schnittstelle der optischen integrierten Schaltung verbunden ist.

7. Optische integrierte Schaltung nach einem der vorherigen Ansprüche, dadurch gekennzeichnet, dass das Substrat der optischen integrierten Schaltung aus Lithiumniobat (LiNb03) ist.

8. Optische integrierte Schaltung nach einem der vorherigen Ansprüche, dadurch gekennzeichnet, dass sie eine Trenneinheit umfasst und dass sie ein Y-förmiger optischer Trenner/Verbinder mit mindestens zwei Zweigen ist.

9. Optische integrierte Schaltung nach einem der Ansprüche 1 bis 7, dadurch gekennzeichnet, dass sie zwei kaskadierte Trenneinheiten umfasst, die entgegengesetzt montiert sind, und dass sie ein Mach-Zehnder-Inferferometer ist, das mit mindestens zwei Zweigen integriert ist.

Figure 1
(Art Antérieur)

Figure 2
(Art Antérieur)

Figure 3
(Art Antérieur)

Figure 4

Figure 5

Figure 6

**Figure 7**

**Figure 8**

**Figure 9**

Figure 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9732228 A
- WO 02071112 A
- EP 0716336 A
- JP 301307 A
- JP 11352347 A
- JP 4355714 A
- DE 4225085
- JP 2000180646 A

**Littérature non-brevet citée dans la description**

- **H. Yajima.** Coupled mode analysis of dielectric planar branching waveguide. *IEEE Journal of Quantum Electronics,* Octobre 1978, vol. 14 (10
- **A. Klekamp ; P. Kersten ; W. Rehm.** An improved single-mode Y-branch design for cascaded 1:2 splitters. *Journal of Lightwave Technology,* Décembre 1996, vol. 14 (12
- **VINCHANT J.F et al.** INP DIGITAL OPTICAL SWITCH GUIDED-WAVE PHOTONIC SWITCHING. *IEE proceedings J. optoelectronics,* vol. 140 (5